# EUROPEAN PATENT APPLICATION

(11) **EP 4 581 937 A1**
(43) Date of publication of application: **09.07.2025**
(21) Application number: 23859786.8
(22) Date of filing: 19.06.2023
(51) Int. Cl.: A23G 1/32, A23G 1/36, A23G 1/40, A23G 1/46, A23L 29/244

(54) **CHOCOLATE BATTER, CHOCOLATE, AND CHOCOLATE CONFECTIONERY**

(30) Priority: 01.09.2022 JP 2022139387
(71) Applicant: Lotte Co., Ltd., Tokyo 160-0023 (JP)
(72) Inventor: SAMESHIMA, Kazuki, Saitama-shi, Saitama 336-0027 (JP); MURAMATSU, Miki, Saitama-shi, Saitama 336-0027 (JP)
(74) Representative: V.O.
(86) International application number: PCT/JP2023/022549
(87) International publication number: WO 2024/048016

(57) **Abstract**

The problem to be solved by the present invention is to provide a chocolate base providing satisfactory sweetness even if sugar content is low, and excellent in development of aroma such as milk flavor and vanilla flavor. The problem can be solved by a chocolate base containing less than 39 mass% of sugar content, dietary fibers, whole milk powder, cream powder, and butter milk powder, in which the dietary fibers are contained independently from dietary fibers originally contained in other materials contained in the chocolate base.

## Description

### Technical Field

The present invention relates to chocolate base, chocolate, and chocolate confectionery.

### Background Art

For chocolate, various products and methods for producing them are known. For example, Patent Literature 1 discloses, for providing "chocolate which can suppress increase in viscosity without addition of lecithin", "chocolate containing no lecithin as a food additive and constituted of butter milk powder and a dietary fiber not derived from cacao". Patent Literature 2 disclose "in the circumstance that existing chocolate compositions having reduced sugar content suffer from a number of drawbacks, including poor texture and taste, difficulty in processing, and poor colonic and intestinal tolerance and in an attempt to overcome drawbacks of existing chocolate compositions having reduced sugar content", "a chocolate composition comprising 30 wt% or less of sucrose and dietary fibers in combination, wherein the dietary fibers in combination includes dextrin, inulin and oligofructose, the content of dextrin is 5 to 10 wt% and the content of the inulin oligofructose mixture is 6 to 11 wt%".

### Citation List

### Patent Literature

Patent Literature 1: JP 2022-040618 A
Patent Literature 2: JP 5085557 B2

### Summary of Invention

### Technical Problem

In recent years, low-sugar content foods have attracted attention due to rising health concerns. Since chocolate usually contains sugar, chocolate tends to be avoided in view of sugar content. In the circumstance, low-sugar content chocolate has been desired. For example, in low-sugar content milk chocolate, dietary fiber is often used as a substitute for sugar. However, when chocolate contains a dietary fiber, unpleasant texture derived from the dietary fiber stands out, and the taste of the entire chocolate tends to be impaired. Such chocolate still has room for further improvement particularly in sweetness, bitterness, milk flavor, and development of aroma.

In the circumstance, the present invention is directed to providing chocolate base, chocolate (particularly, milk chocolate), and chocolate confectionery (hereinafter, chocolate base, chocolate, and chocolate confectionery will be collectively referred to as "chocolate products") having satisfactory sweetness even if sugar content is low and excellent development of aroma such as milk flavor and vanilla flavor.

### Solution to Problem

As a result of intensive studies conducted by the present inventors, they found that when whole milk powder, cream powder, and butter milk powder are all added to chocolate products containing a dietary fiber added in order to reduce sugar content, it is possible to obtain chocolate products having satisfactory sweetness and excellent development of aroma such as milk flavor and vanilla flavor.

The present invention includes the following embodiments.
[1] Chocolate base containing:
   less than 39 mass% of sugar content;
   a dietary fiber;
   whole milk powder;
   cream powder; and
   butter milk powder, in which
   the dietary fiber is contained independently from dietary fibers inherently contained in other materials contained in the chocolate base.
[2] The chocolate base according to [1], in which
   an amount of the whole milk powder is 5 to 35 mass% based on the chocolate base,
   an amount of the cream powder is 0.5 to 8.0 mass% based on the chocolate base, and
   an amount of the butter milk powder is 0.5 to 15.0 mass% based on the chocolate base.
[3] The chocolate base according to [1] or [2], in which
   the amount of the whole milk powder is 8 to 20 mass% based on the chocolate base,
   the amount of the cream powder is 0.8 to 5.0 mass% based on the chocolate base, and
   the amount of the butter milk powder is 0.8 to 10.0 mass% based on the chocolate base.
[4] The chocolate base according to any one of [1] to [3], in which an amount of the dietary fiber is 5 to 40 mass% based on the chocolate base.
[5] The chocolate base according to any one of [1] to [4], in which the dietary fiber includes inulin.
[6] Chocolate containing the chocolate base according to any one of [1] to [5].
[7] Chocolate confectionery containing the chocolate base according to any one of [1] to [5].

### Advantageous Effects of Invention

According to the present invention, it is possible to provide chocolate products having satisfactory sweetness even if sugar content is low and excellent development of aroma such as milk flavor and vanilla flavor.

### Description of Embodiments

Hereinafter, embodiments of the present invention will be specifically described, but the present invention is not limited thereto, and can be modified in various ways without departing from the gist thereof.

### <Definitions>

### "Fair Competition Code on Labeling of Chocolate Products"

The definitions of chocolate base, chocolate, chocolate confectionery, and milk chocolate follow the "Fair Competition Code of Labeling of Chocolate Products" (partially modified on December 10, 2021), but not limited to the Code. In addition, the definition of cacao mass follows the "Fair Competition Code on Chocolate Labeling". Specific definitions of these are as follows. The following definitions of terms may follow the aforementioned Code.

The "cacao mass" refers to a product (including a mass treated with e.g., an alkali) obtained by grinding cacao nib (refers to cacao pieces prepared by removing shells from cacao beans as technically as possible) by a mechanical means without removing or adding any component thereof.

The "chocolate base" contains an edible fat and oil and a saccharide as major materials. To the major materials, e.g., cacao components (cacao mass, cocoa powder, etc), dairy products, flavors and emulsifiers are added as necessary. Chocolate base is produced through part or whole of the chocolate-production steps (e.g., mixing step, grinding process, refining process, molding process, and cooling process). The "chocolate base" is a product produced by adding, to a raw material, i.e., cacao mass, cocoa butter, cocoa cake, or cocoa powder prepared from cacao beans, for example, a saccharide, a dairy product, an edible fat and oil except cocoa butter, and a flavor as needed, and subjecting the mixture to a production process routinely employed. The "chocolate base" may have a cocoa content of 35% or more (the content of cocoa butter is 18% or more) based on the total mass thereof, and a moisture content of 3% or less based on the total mass (note that as long as the cocoa content is not less than 21% (the content of cocoa butter is 18% or more) based on the total mass and the sum of the cocoa content and the milk solids is not less than 35% (milkfat is 3% or more based on the total mass), and the milk solids can be used instead of the cocoa content). The chocolate base may be chocolate base for white chocolate or color chocolate.

The "chocolate" refers to chocolate base alone and a processed product of chocolate containing 60% or more of the chocolate base based on the total weight. Chocolate also includes not only dark chocolate and milk chocolate but also white chocolate and color chocolate.

The "chocolate confectionery" refers to a processed product of chocolate containing less than 60% of chocolate base based on the total weight.

The "milk chocolate" refers to chocolate containing 14% or more of the milk solids of the chocolate base contained in chocolate based on the mass of the chocolate base (milkfat content is 3% or more based on the mass of the chocolate base).

### "Ministerial Ordinance Concerning Compositional Standards of Milk and Milk Products"

The definitions of "whole milk powder", "cream powder", and "butter milk powder" follows the "Ministerial Ordinance concerning Ingredient Standards of Milk and Milk Products" (partially revised on December 4, 2020). Specific definitions of these are as follows. The following definitions of terms also follows the aforementioned Ministerial Ordinance.

The "whole milk powder" refers to a powdered milk obtained by almost completely removing the moisture content from raw milk, cow's milk, special cow's milk, or raw buffalo milk, followed by grinding.

The "cream powder" refers to a powdered milk obtained by removing components except the milkfat from raw milk, cow milk, special cow milk, or raw buffalo milk, and then almost completely removing moisture content, followed by grinding.

The "butter milk powder" refers to a powdered milk obtained by almost completely removing the moisture content from butter milk, followed by grinding.

### <Chocolate Base>

An embodiment of the present invention relates to chocolate base containing a dietary fiber, whole milk powder, cream powder, and butter milk powder.

In the chocolate base according to the present embodiment, a dietary fiber, whole milk powder, cream powder, and butter milk powder are all used. As a result, even when the amount of sugar content is less than 39 mass%, satisfactory sweetness is sensed and excellent development of aroma such as milk flavor and vanilla flavor can be obtained.

The reason why such an effect can be exerted is conceivable that since milk raw materials different in flavor are mixed, raw-milk flavor of the entire chocolate is strongly sensed, the sweetness and the flavor of the chocolate are enhanced, and unpleasant texture due to the dietary fiber is improved. However, the present invention is not limited by the above conceivable reason.

In the chocolate base according to the present embodiment, the bitterness is appropriately suppressed; at the same time, an effect of strongly sensing a flavor (milk flavor) can be exerted.

The chocolate base is a so-called low-sugar content base containing less than 39 mass% of sugar content. The amount of sugar content in the chocolate base is calculated by subtracting the amounts of protein, lipid, dietary fiber, ash content, and moisture content from the mass of the chocolate base.

The dietary fiber is a dietary fiber contained independently from dietary fibers inherently contained in the other materials contained in chocolate base (in this sense, hereinafter, also referred to as "additional dietary fiber"). For example, a cacao component such as cacao mass, as a raw material of chocolate, contains a dietary fiber. When the chocolate base of the present embodiment contains an additional dietary fiber, whole milk powder, cream powder, butter milk powder, and cacao content, the additional dietary fiber is different from the dietary fiber contained in the cacao content. Note that the additional dietary fiber may be the same type of dietary fiber as those inherently contained in the other materials contained in the chocolate base.

The additional dietary fiber may be water-soluble or insoluble. Examples of the water-soluble dietary fiber include inulin, isomaltodextrin, and pectin. Examples of the insoluble dietary fiber include soybean dietary fiber, cellulose, hemicellulose, and lignin. Of them, inulin is preferable since it more effectively and reliably solves the problems of the present invention. The additional dietary fibers are used singly or in combination of two or more types thereof.

The amount of dietary fiber based on the chocolate base is preferably 5 to 40 mass%, more preferably 8 to 30 mass%, still more preferably 10 to 20 mass%, and particularly preferably 13 to 18 mass%.

The amount of the whole milk powder based on the chocolate base is preferably 5 to 35 mass%, more preferably 6 to 30 mass%, further preferably 8 to 20 mass%, particularly preferably 9 to 18 mass%, and extremely preferably 10.0 to 15.5 mass%.

The amount of the cream powder based on the chocolate base is preferably 0.5 to 8.0 mass%, more preferably 0.5 to 6.0 mass%, further preferably 0.8 to 5.0 mass%, particularly preferably 1.5 to 4.5 mass%, and extremely preferably 2.5 to 3.5 mass%.

The amount of the butter milk powder based on the chocolate base is preferably 0.5 to 15.0 mass%, more preferably 0.5 to 12.0 mass%, further preferably 0.8 to 10.0 mass%, particularly preferably 0.9 to 9.5 mass%, and extremely preferably 2.0 to 8.0 mass%.

When the amounts of dietary fiber, whole milk powder, cream powder, and butter milk powder fall within the above ranges, the problem of the present invention can be more effectively and reliably solved.

From the same viewpoint, the total amount of the whole milk powder, cream powder, and butter milk powder based on the chocolate base is preferably 6 to 58 mass%, more preferably 7 to 48 mass%, still more preferably 9.6 to 35.0 mass%, particularly preferably 11.4 to 32.0 mass%, and extremely preferably 14.5 to 27.0 mass%.

The chocolate base may contain additional components. Examples of the additional components include a cacao content such as cacao mass, cocoa butter, cocoa cake, cocoa powder, saccharides, dairy products (excluding whole milk powder, cream powder, and butter milk powder), an edible fat and oil (excluding cocoa butter), an emulsifiers, and a flavor.

The cacao content of the chocolate base based on the chocolate base is preferably 21 to 50 mass%, more preferably 22 to 45 mass%, and still more preferably 25 to 35 mass%. When the chocolate base contains cacao mass, the amount of cacao mass based on the chocolate base is preferably 3 to 33 mass%, more preferably 8 to 28 mass%, and still more preferably 13 to 23 mass%.

Although not particularly limited, it is preferable that the amount of milk solid in the chocolate base is 14 mass% or more based on the chocolate base, and the amount of milkfat in the chocolate base is 3 mass% or more based on the chocolate base.

### <Chocolate and Chocolate Confectionery>

An embodiment of the present invention relates to chocolate containing the chocolate base.

An embodiment of the present invention relates to chocolate confectionery containing chocolate base.

Examples of the chocolate and chocolate confectionery include products obtained by mixing or kneading food in chocolate base; products obtained by forming a shell of chocolate base and putting food inside; products obtained by covering food with chocolate base; products obtained by covering chocolate base with food; and products obtained by joining chocolate base to food. Examples of the food include nuts, fruits, liquids, candies, biscuits, and saccharides.

### Examples

Hereinafter, the present invention will be described in more detail with reference to Examples, Comparative Examples, and Reference Examples but the technical scope of the present invention is not limited thereto.

### <Production of Chocolate>

Chocolate was produced using inulin as a dietary fiber, whole milk powder, cream powder, butter milk powder, cocoa butter, cacao mass, a saccharide, an edible fat and oil, an emulsifier, and a flavor. Specific numerical values are as shown in Table 1. Note that, in all examples, the amount of cacao mass was 18 mass%, the amount of cocoa butter was 12 mass%, the amount of vegetable fat and oil as the edible fat and oil was 9 mass%, and the amounts of emulsifier and flavors were 0.3 mass%. The amount of sugar as a saccharide was 40 mass% in Reference Example 1 and 24 mass% in other examples, and the amount of sugar content was 52 mass% in Reference Example 1 and 36.4 mass% in other examples.

### [Table 1]

**Table 1**

| | Reference Example 1 | Comparative Example 1 | Comparative Example 2 | Example 1 | Example 2 | Example 3 | Example 4 |
|---|---|---|---|---|---|---|---|
| Inulin (mass%) | 0 | 16.0 | 16.0 | 16.0 | 16.0 | 16.0 | 16.0 |
| Whole milk powder (mass%) | 20.7 | 20.7 | 14.7 | 9.7 | 14.7 | 15.7 | 18.7 |
| Cream powder (mass%) | 0 | 0 | 6.0 | 2.0 | 3.0 | 4.0 | 1.0 |
| Butter milk powder (mass%) | 0 | 0 | 0 | 9.0 | 3.0 | 1.0 | 1.0 |

### <Evaluation of Chocolate>

Seven panelists who had been trained in advance for this sensory evaluation, tasted the chocolate produced in each of Examples, Comparative Examples, and Reference Examples and evaluated the intensity of sweetness, intensity of bitterness, intensity of raw-milk flavor, and the speed of development of aroma such as milk flavor and vanilla flavor. The evaluation criteria and evaluation results of individual evaluation items are as follows. The chocolate of Reference Example 1 was used as a control.

### [Intensity of Sweetness]

Point 3: Substantially the same as control
Point 2: Slightly weaker than control
Point 1: Considerably weaker than control
Point 0: Significantly weaker than control

**[Table 2]**

| Table 2: Intensity of Sweetness | | | | | | |
|---|---|---|---|---|---|---|
| | Comparative Example 1 | Comparative Example 2 | Example 1 | Example 2 | Example 3 | Example 4 |
| Panelist 1 | 0 | 1 | 3 | 3 | 3 | 2 |
| Panelist 2 | 0 | 1 | 3 | 3 | 3 | 1 |
| Panelist 3 | 0 | 1 | 3 | 3 | 3 | 2 |
| Panelist 4 | 0 | 1 | 2 | 3 | 3 | 2 |
| Panelist 5 | 0 | 1 | 3 | 3 | 3 | 2 |
| Panelist 6 | 0 | 1 | 3 | 3 | 3 | 2 |
| Panelist 7 | 0 | 1 | 3 | 3 | 3 | 2 |
| Average point | 0.0 | 1.0 | 2.9 | 3.0 | 3.0 | 1.9 |

### [Intensity of Bitterness]

Point 3: Substantially the same as control
Point 2: Slightly stronger than control
Point 1: Considerably stronger than control
Point 0: Significantly stronger than control

**[Table 3]**

| Table 3: Intensity of Bitterness | | | | | | |
|---|---|---|---|---|---|---|
| | Comparative Example 1 | Comparative Example 2 | Example 1 | Example 2 | Example 3 | Example 4 |
| Panelist 1 | 0 | 1 | 3 | 3 | 3 | 2 |
| Panelist 2 | 0 | 1 | 3 | 3 | 3 | 1 |
| Panelist 3 | 0 | 1 | 3 | 3 | 3 | 2 |
| Panelist 4 | 0 | 1 | 2 | 3 | 3 | 2 |
| Panelist 5 | 0 | 1 | 3 | 3 | 3 | 2 |
| Panelist 6 | 0 | 1 | 3 | 3 | 3 | 2 |
| Panelist 7 | 0 | 1 | 3 | 3 | 3 | 2 |
| Average point | 0.0 | 1.0 | 2.9 | 3.0 | 3.0 | 1.9 |

### [Intensity of Raw-milk Flavor]

Point 3: Substantially the same as control
Point 2: Slightly weaker than control
Point 1: Considerably weaker than control
Point 0: Significantly weaker than control

**[Table 4]**

| Table 4: Intensity of Raw-milk Flavor | | | | | | |
|---|---|---|---|---|---|---|
| | Comparative Example 1 | Comparative Example 2 | Example 1 | Example 2 | Example 3 | Example 4 |
| Panelist 1 | 0 | 0 | 3 | 3 | 3 | 2 |
| Panelist 2 | 0 | 1 | 2 | 3 | 2 | 1 |
| Panelist 3 | 0 | 0 | 3 | 3 | 3 | 2 |
| Panelist 4 | 0 | 0 | 3 | 3 | 2 | 1 |
| Panelist 5 | 0 | 0 | 3 | 3 | 3 | 2 |
| Panelist 6 | 0 | 0 | 3 | 3 | 3 | 2 |
| Panelist 7 | 0 | 0 | 3 | 3 | 3 | 2 |
| Average point | 0.0 | 0.1 | 2.9 | 3.0 | 2.7 | 1.7 |

### [Development Speed of Aroma of Milk Flavor and Vanilla Flavor]

Point 3: Substantially the same as control
Point 2: Slightly slower than control
Point 1: Considerably slower than control
Point 0: Significantly slower than control

**[Table 5]**

| Table 5: Development Speed of Aroma | | | | | | |
|---|---|---|---|---|---|---|
| | Comparative Example 1 | Comparative Example 2 | Example 1 | Example 2 | Example 3 | Example 4 |
| Panelist 1 | 0 | 0 | 3 | 3 | 3 | 2 |
| Panelist 2 | 0 | 1 | 3 | 3 | 2 | 1 |
| Panelist 3 | 0 | 0 | 3 | 3 | 3 | 2 |
| Panelist 4 | 0 | 0 | 3 | 3 | 3 | 2 |
| Panelist 5 | 0 | 0 | 3 | 3 | 3 | 2 |
| Panelist 6 | 0 | 0 | 3 | 3 | 3 | 2 |
| Panelist 7 | 0 | 0 | 3 | 3 | 3 | 2 |
| Average point | 0.0 | 0.1 | 3.0 | 3.0 | 2.9 | 1.9 |

As understood from the results, when a dietary fiber, whole milk powder, cream powder, and butter milk powder were all used, satisfactory sweetness was sensed even when the amount of sugar content was less than 39 mass%, and the development of aroma such as milk flavor and vanilla flavor was excellent. In addition, when a dietary fiber, whole milk powder, cream powder, and butter milk powder were all used, the bitterness was appropriately suppressed, and the raw-milk flavor was strongly sensed.

## Claims

1. Chocolate base containing:
less than 39 mass% of sugar content;
a dietary fiber;
whole milk powder;
cream powder; and
butter milk powder, wherein
the dietary fiber is contained independently from dietary fibers inherently contained in other materials contained in the chocolate base.

2. The chocolate base according to claim 1, wherein
an amount of the whole milk powder is 5 to 35 mass% based on the chocolate base,
an amount of the cream powder is 0.5 to 8.0 mass% based on the chocolate base, and
an amount of the butter milk powder is 0.5 to 15.0 mass% based on the chocolate base.

3. The chocolate base according to claim 1, wherein
an amount of the whole milk powder is 8 to 20 mass% based on the chocolate base,
an amount of the cream powder is 0.8 to 5.0 mass% based on the chocolate base, and
the amount of the butter milk powder is 0.8 to 10.0 mass% based on the chocolate base.

4. The chocolate base according to claim 1, wherein an amount of the dietary fiber is 5 to 40 mass% based on the chocolate base.

5. The chocolate base according to claim 1, wherein the dietary fiber includes inulin.

6. Chocolate containing the chocolate base according to any one of claims 1 to 5.

7. A chocolate confectionery containing the chocolate base according to any one of claims 1 to 5.
